# EUROPÄISCHE PATENTSCHRIFT

(11) **EP 3 111 205 B1**
(45) Veröffentlichungstag und Bekanntmachung des Hinweises auf die Patenterteilung: **30.08.2023**
(21) Anmeldenummer: 15707077.2
(22) Anmeldetag: 23.02.2015
(51) Int. Cl.: G01N 29/02, G01N 29/036, G01N 29/32, G01N 30/76

(54) **VORRICHTUNG UND VERFAHREN ZUR BESTIMMUNG DER KONZENTRATION EINES DAMPFES MITTELS EINES SCHWINGKÖRPERSENSORS**
DEVICE AND METHOD FOR DETERMINATION OF THE CONCENTRATION OF A VAPOR WITH A OSCILLATING BODY SENSOR
DISPOSITIF ET PROCÉDÉ POUR LA DETERMINATION DE LA CONCENTRATION D'UNE VAPEUR AVEC UN CAPTEUR DE CORPS OSCILLANT

(30) Priorität: 26.02.2014 DE 102014102484
(43) Veröffentlichungstag der Anmeldung: 04.01.2017
(73) Patentinhaber: Aixtron SE, 52134 Herzogenrath (DE)
(72) Erfinder: BECCARD, Birgit Irmgard, 52066 Aachen (DE); CREMER, Claudia, 52428 Jülich (DE); TRIMBORN, Karl-Heinz, 41844 Wegberg (DE); LONG, Michael, 52134 Herzogenrath-Kohlscheid (DE); EICHLER, Andy, 52080 Aachen (DE); AL AHMAD, Nael, 52351 Düren (DE)
(74) Vertreter: Grundmann, Dirk
(86) Internationale Anmeldenummer: PCT/EP2015/053703
(87) Internationale Veröffentlichungsnummer: WO 2015/128279

(56) Entgegenhaltungen:
- DE-A1-102011 051 931
- US-A- 5 289 715
- US-A1- 2005 063 882
- US-A1- 2006 179 918

## Beschreibung

Die Erfindung betrifft eine Vorrichtung und ein Verfahren zur Bestimmung oder Regelung des Massenflusses des von einem Trägergas durch ein Volumen geförderten Dampfes, wobei das Volumen mit einer Heizeinrichtung auf eine Temperatur oberhalb der Kondensationstemperatur des Dampfes aufheizbar ist. Es wird ein Sensor verwendet, der einen Schwingkörper aufweist, dessen Oszillationsfrequenz von einer sich auf der Oberfläche des Schwingkörpers kondensierenden Massenanhäufung beeinflusst wird.

Derartige Sensoren sind bekannt aus den US 2006/179918 A1, US 5,289,715 A und US 2005/ 063882 A1.

Die DE 10 2011 051 931 A1 beschreibt eine OLED-Beschichtungseinrichtung. In einem Depositionsreaktor befindet sich ein Suszeptor, dessen Oberfläche gekühlt wird und ein zu beschichtendes Substrat trägt. Aus einem auf eine Temperatur oberhalb der Kondensationstemperatur eines Dampfes aufgeheizten Gaseinlassorgan wird ein Trägergas-Dampfgemisch in die Prozesskammer eingespeist. Der Dampf kondensiert auf der Oberfläche des Substrates, wobei die Qualität der Schicht einerseits von der Konzentration (dem Partialdruck) des Dampfes in der Prozesskammer, andererseits aber auch von der Temperatur der Substratoberfläche abhängt. Bei einem Verfahren zum Abscheiden von OLED-Schichten auf einem Substrat ist die Beibehaltung einer zeitlich konstanten Dampffluss-Rate in die Prozesskammer gewünscht. Der Dampf wird in einem Dampferzeuger durch Wärmebeaufschlagung eines festen oder flüssigen Ausgangsstoffes erzeugt. Der Ausgangsstoff kann als Aerosol in ein Verdampfungsvolumen gebracht werden. Das Verdampfungsvolumen wird von einem Trägergas durchströmt, mit welchem der Dampf in die Prozesskammer gebracht wird. Das Trägergas wird über einen Massenfluss-Kontroller in das Rohrleitungssystem der Verdampfungseinrichtung eingespeist. Mit einem zweiten Sensor wird ein Sensorsignal gewonnen, welches von der Konzentration (dem Partialdruck) des Dampfes beeinflusst wird.

Aus den WO 2010/130775 A1, US 2006/0179918 A1 und US 8,215,171 B1 sind sogenannte QCM-Sensoren (Quartz crystal microbalance) bekannt. Diese Sensoren werden in Vakuum-Bedampfungsvorrichtungen, sogenannten VTE-Systemen (Vacuum thermal evaporation) verwendet. Ein QCM-Sensor besteht aus einem Quarzkristall, der in seiner Resonanzfrequenz zum Schwingen angeregt wird. Bei der Bedampfung, beispielsweise der Bedampfung von Objekten mit Metallen, beispielsweise Gold, oder aber auch der Bedampfung von Objekten mit Nichtmetallen kondensiert eine gewisse Dampfmenge auf einem Abschnitt der Oberfläche des von dem Quarz gebildeten Schwingkörper. Der Schwingkörper wird beim Stand der Technik auf einer Temperatur von etwa 50°C gehalten. Während des Beschichtungsvorganges wächst eine Kondensatschicht auf der Oberfläche des Schwingkörpers auf. Diese zusätzliche Masse verstimmt den Schwingkörper, so dass sich die Frequenz zeitlich ändert. Dies erfolgt nach der sogenannten SAUERBREY-Gleichung. Bei der bekannten Verwendung dieses QCM-Sensors wird der Beschichtungsprozess beendet, wenn diese Oszillatorfrequenz einen vorbestimmten Endwert erreicht hat.

Nach einer bestimmten Anzahl von Beschichtungsvorgängen muss der Sensor entweder ausgetauscht oder gereinigt werden, damit seine Schwingfähigkeit erhalten bleibt, da die auf dem Quarzkristall abgeschiedenen Schichten nicht nur die Frequenz, sondern auch die Amplitude beeinflussen, da sie dämpfend wirken.

Bauartbedingt lassen sich handelsübliche QCM-Sensoren nicht bei hohen, wesentlich oberhalb von 50°C liegenden Temperaturen verwenden.

Der Erfindung liegt die Aufgabe zugrunde, bei einer gattungsgemäßen Vorrichtung oder einem gattungsgemäßen Verfahren, insbesondere einem Verfahren zum Abscheiden von OLED-Schichten einen Sensor zur Bestimmung der Dampfkonzentration anzugeben, dessen Sensorsignal vom Trägergas nicht oder allenfalls geringfügig beeinflusst wird.

Gelöst wird die Aufgabe durch das in den Ansprüchen angegebene Verfahren und die in den Ansprüchen angegebene Vorrichtung.

Zunächst und im Wesentlichen wird vorgeschlagen, dass als Sensor ein QCM-Sensor verwendet wird, also ein Sensor, der einen in Oszillation bringbaren Schwingkörper aufweist, dessen Oszillationsfrequenz von einer auf einer Oberfläche des Schwingkörpers vom kondensierten Dampf gebildeten Massenanhäufung, insbesondere Schicht beeinflusst wird. Die Oszillatorfrequenz hängt einerseits von der Dicke und andererseits von der Qualität, also den physikalischen aber auch chemischen Eigenschaften der Schicht ab. Der Sensor wird in dem Volumen angeordnet, durch welches der Trägergasstrom den Dampf transportiert. Durch die zeitliche Änderungsrate der Resonanzfrequenz des vom Schwingkörper ausgebildeten Oszillators lässt sich ein Wert für die Dampfkonzentration (Partialdruck) innerhalb des Volumens ableiten. Aus der Flussrate des kontrolliert in das Volumen eingespeisten und das Volumen durchströmenden Trägergases lässt sich dann die Flussrate des Dampfes ermitteln.

Ein Beispiel betrifft darüber hinaus die Verwendung eines derartigen Sensors bei einer Gasversorgung einer OVPD (organic-vapor-phase-deposition)- Beschichtungseinrichtung, die einen Depositionsreaktor aufweist, in dem ein kühlbarer Suszeptor angeordnet ist zur Aufnahme ein oder mehrerer zu beschichtender Substrate. Die Erfindung betrifft auch eine Vorrichtung zum Verdampfen eines flüssigen oder festen Ausgangsstoffs mit einem beheizbaren Verdampfer, in den durch eine Eintrittsöffnung ein Eingangsstrom eines Trägergases eintritt, welches den Verdampfer durchströmt und zusammen mit einem durch Verdampfen des Ausgangsstoffs erzeugten Dampf als Ausgangsstrom aus dem Verdampfer durch eine Austrittsöffnung austritt. In Stromrichtung ist vor der Eintrittsöffnung ein erster Sensor angeordnet zur Ermittlung eines den Massenfluss des Eingangsstromes zugeordneten ersten Wertes. Die Erfindung betrifft die Weiterbildung eines zweiten Sensors zur Ermittlung eines vom Partialdruck des Dampfes abhängigen zweiten Wertes. Mit einer Recheneinrichtung einer Auswerteeinrichtung und/oder eines Reglers wird durch Inbeziehungsetzen der beiden Werte ein dem Partialdruck des im Ausgangsstrom transportierten Dampfes entsprechender Wert gewonnen. Erfindungsgemäß wird der zweite Wert aus der zeitlichen Änderung der Oszillationsfrequenz des OCM-Sensors gewonnen. Mit einem entsprechenden Verfahren zum Erzeugen eines in einem Trägergas transportierten Dampfs lässt sich dann der Massenfluss des Dampfes ermitteln, der in eine Prozesskammer einer OVPD-Beschichtungsanlage eingespeist wird. Der Sensor kann somit als Bestandteil eines geschlossenen Regelkreises verwendet werden, da mit ihm Antwortzeiten von 0,1 Sekunde oder weniger verwirklichbar sind. Das Sensorsignal des Sensors wird einem Regler zugeleitet, der die Verdampfungsrate beziehungsweise den Massenfluss des Trägergases steuern kann. Durch eine Variation der Dampferzeugungsrate oder des Trägergasflusses lässt sich die Förderrate des Dampfes mit hoher Genauigkeit einstellen und konstant halten. Das Volumen, in dem sich der Sensor befindet, kann auf Temperaturen größer als 200°C, insbesondere größer als 350°C und auf Temperaturen, die bis 450°C erreichen, aufgeheizt werden. Ein Sensorkristall aus Gallium-Ortho-Phosphat (GaPO₄) erweist sich als optimal, wenn die Sensortemperaturen größer als 160°C und bevorzugt auch größer als 180°C liegen sollen. Die Wachstumsrate, mit der der Dampf auf der Oberfläche des Schwingkörpers kondensiert und die physikalischen Schichteigenschaften hängen von der Kondensationstemperatur ab. Es ist von Vorteil, wenn die Sensortemperatur nur geringfügig unterhalb der Kondensationstemperatur liegt. Die Temperatur innerhalb des Volumens liegt deutlich höher als die Kondensationstemperatur des Dampfes, ist aber geringer als die Zerlegungstemperatur, bei der sich der Dampf chemisch zerlegen kann. Die Temperatur der Sensoroberfläche kann auf einer Temperatur gehalten werden, die etwa 50° niedriger liegt als die Kondensationstemperatur des Dampfes oder als die oberhalb der Kondensationstemperatur des Dampfes liegende Gastemperatur im Volumen. Die Wachstumsrate der Schicht auf der Oberfläche des Schwingkörpers beeinflusst die Änderung der Frequenz des Schwingkörpers. Eventuelle nicht lineare Zusammenhänge werden über einen Korrekturfaktor berücksichtigt. Der Sensor ist bevorzugt innerhalb des Gasstroms angeordnet, der den Dampf transportiert. Die Sensoroberfläche wird deshalb mit einer relativ hohen Dampfkonzentration beaufschlagt. Die Oberflächentemperatur des Sensors wird so eingestellt, dass sich eine möglichst geringe Wachstumsrate einstellt, so dass der Sensor über eine längere Zeit betrieben werden kann. Es ist von besonderem Vorteil, wenn der Sensor auf Temperaturen oberhalb der Kondensationstemperatur des Dampfes aufheizbar ist. Er ist insbesondere auf die Temperatur des Gasvolumens aufheizbar, die im Bereich zwischen 200 und 450°C liegen kann. Bei einer derart erhöhten Temperatur dampft die Beschichtung von der Schwingkörperoberfläche wieder ab, so dass der Sensor in situ gereinigt werden kann. Es können zwei Sensoren verwendet werden. Die beiden Sensoren sind jeweils mit dem Regler verbunden und können alternativ verwendet werden. Der zur Regelung beziehungsweise zur Bestimmung der Dampfkonzentration im Volumen verwendete Sensor wird mit Hilfe einer Temperiereinrichtung gekühlt. Die Temperiereinrichtung kann einen Kühlflüssigkeitskanal aufweisen, der von einer Kühlflüssigkeit durchströmt wird. Der Schwingkörper kann in einem Gehäuse angeordnet sein, welches die besagten Kühlkanäle aufweist, wobei die Kühlkanäle bevorzugt so angeordnet sind, dass lediglich der Schwingkörper und insbesondere lediglich dessen dem Dampf ausgesetzte Oberfläche gekühlt wird. Bei der Verwendung von zwei Sensoren wird der nicht zur Regelung verwendete Sensor nicht gekühlt. Dessen aktive Oberfläche des Schwingkörpers ist somit auf einer Temperatur, bei der eine Beschichtung von der aktiven Oberfläche abdampfen kann. In einer bevorzugten Ausgestaltung besitzt das Sensorgehäuse eine Verschlusseinrichtung, mit der eine Öffnung, rückwärtig derer sich die aktive Oberfläche des Schwingkörpers befindet, verschlossen werden kann, so dass die aktive Oberfläche nicht dem Dampf ausgesetzt ist. Durch das zyklische Reinigen der Sensoroberfläche durch Aufheizen des Sensors auf eine Temperatur, die oberhalb der Kondensationstemperatur liegt, lässt sich die Standzeit um einen Faktor 100 gegenüber der Standzeit von QCM-Sensoren erhöhen, wie sie gemäß eingangs genanntem Stand der Technik verwendet werden. Der Sensor kann bei Totalgasdrücken im Bereich von 0,1 und 10 mbar verwendet werden. Die Einsatztemperatur des Sensors liegt zwischen 200 und 400°C. Der Dampf im Trägergas kann einen Massenanteil von 0,1 bis 10% besitzen. Die Massenkonzentration des Dampfes innerhalb der Messzelle wird durch die Änderungsrate der Schwingfrequenz des Schwingkörpers ermittelt. Die eingangs genannte DE 10 2011 051 931 A1, die DE 10 2011 051 261 A1 und die DE 10 2011 051 260 A1 beschreiben Verfahren und Vorrichtungen zur Regelung der Dampfproduktionsrate durch einerseits Variation der Förderleistung des zu verdampfenden Stoffs und andererseits durch Variation der Verdampfungstemperatur. Eine bevorzugte Regeleinrichtung zur Regelung der Dampfproduktionsrate umfasst erfindungsgemäß zwei Regelkreise. Mit einem ersten Regelkreis, der eine große Zeitkonstante aufweist, also ein "langsamer" Regler ist, wird eine durchschnittliche Dampfproduktionsrate auf einem vorgegebenen Durchschnittswert gehalten. Dies erfolgt durch die Variation der Förderleistung des zu verdampfenden Stoffs. Die mittlere Förderleistung des zu verdampfenden Stoffs entspricht langfristig der durchschnittlichen Dampfproduktionsrate. Mit einem zweiten Regelkreis, der eine verglichen mit dem ersten Regelkreis kleine Zeitkonstante aufweist, also ein "schneller" Regler ist, werden kurzzeitige Abweichungen einer aktuellen Dampfproduktionsrate von einem Mittelwert kompensiert. Kurzzeitige Abweichungen können beispielsweise eine periodische Natur haben, wenn eine Fördereinrichtung zur Förderung des zu verdampfenden Stoffs, also bevorzugt eines zu verdampfenden Pulvers, mechanische, rotativ betriebene Antriebs- beziehungsweise Fördermittel aufweist. Kurzzeitige Störungen in der Konstanz der Förderleistung können aber auch in einer Inhomogenität des zu verdampfenden Pulvers begründet sein. Diese kurzzeitigen Änderungen werden durch Erhöhen beziehungsweise Absenken der Verdampfungstemperatur kompensiert, wobei mit dem ersten Regelkreis die Förderleistung so eingestellt wird, dass die Verdampfungstemperatur sowohl nach oben als auch nach unten variiert werden kann. Begrenzt ist die Verdampfungstemperatur nach unten durch die Kondensationstemperatur und nach oben durch die Zerlegungstemperatur des zu verdampfenden Stoffs. Mit dem ersten Regelkreis wird die Förderleistung so eingestellt, dass im zeitlichen Mittel die Verdampfungstemperatur etwa in der Mitte zwischen einer oberen Grenztemperatur und einer unteren Grenztemperatur liegt.

Ein Ausführungsbeispiel der Erfindung wird nachfolgend anhand beigefügter Zeichnungen erläutert. Es zeigen:
- Fig. 1: schematisch den Aufbau einer OLED-Beschichtungseinrichtung und
- Fig. 2: schematisch den Aufbau eines in der Figur 1 bezeichneten QCM-Sensors.

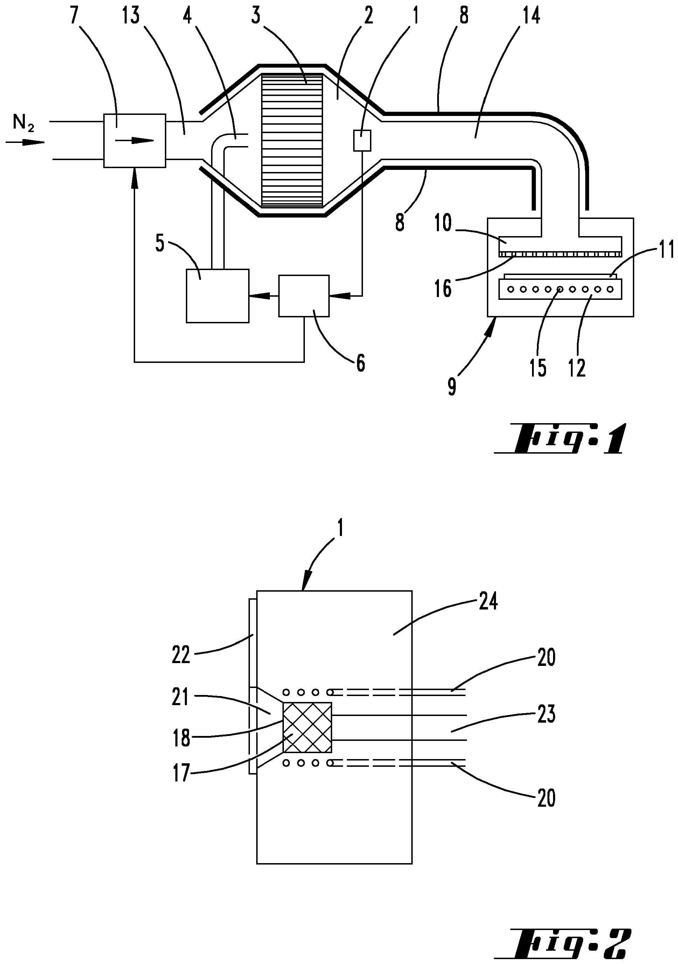

Die in der Figur 1 dargestellte Beschichtungseinrichtung besitzt einen Depositionsreaktor 9. Es handelt sich um einen gasdichten Behälter, in dem sich eine Prozesskammer befindet, in der ein Totaldruck von 0,1 bis 100 mbar einstellbar ist. Insbesondere ist dort ein geregelter Totaldruck von 0,1 bis 10 mbar einstellbar. Innerhalb des Depositionsreaktors 9 befindet sich ein Suszeptor 12, der Kühlkanäle 15 aufweist, durch die eine Kühlflüssigkeit fließen kann, um den Suszeptor 12 auf einer definierten Depositionstemperatur zu halten. Auf der Oberseite des Suszeptors liegt ein zu beschichtendes Substrat 11 auf.

Oberhalb des Suszeptors 12 befindet sich ein duschkopfartiges Gaseinlassorgan 10, durch welches ein Dampfträgergasgemisch in die zwischen Suszeptor 12 und Gaseinlassorgan 10 angeordnete Prozesskammer eingeleitet werden kann. Das Gaseinlassorgan 10 ist auf einer Temperatur gehalten, die oberhalb der Kondensationstemperatur des Dampfes liegt, so dass ein gasförmiger Ausgangsstoff in die Prozesskammer gebracht wird und sich der Dampf auf dem Substrat 11 niederschlagen kann. Das Kondensat des Dampfes bildet eine OLED-Schicht.

Das Gaseinlassorgan 10 wird mittels einer Dampfeinspeiseleitung 14 mit einem Trägergas-Dampfgemisch gespeist, welches in einem Dampferzeuger 2, 3, 4 erzeugt wird. Der Dampferzeuger 2, 3, 4 und die Dampfeinspeiseleitung 14 werden mittels einer Heizeinrichtung 8 auf einer Temperatur gehalten, die oberhalb der Kondensationstemperatur des Dampfes aber unterhalb der Zerlegungstemperatur des Dampfes liegt.

Mittels eines Massenflusskontrollers 7 wird ein definierter Fluss eines Trägergases, beispielsweise Stickstoff, durch eine eine Eintrittsöffnung bildende Zuleitung 13 in den Verdampfer 2, 3, 4 eingeleitet.

Im Ausführungsbeispiel besitzt der Verdampfer eine Injektionskammer, in die ein Injektor 4 mündet, mit dem ein zu verdampfender Festkörper oder eine zu verdampfende Flüssigkeit als Aerosol in die Injektionskammer gebracht wird. Das Aerosol gelangt in einen heißen Verdampfungskörper 3, wo es verdampft. Die Flüssigkeit oder der Festkörper wird über eine Fördereinrichtung aus einem Vorratsbehälter transportiert. Der Injektor 4 kann Teil eines Aerosolerzeugers 5 sein, mit dem der Festkörper oder die Flüssigkeit als Aerosol in den Trägergasstrom eingespeist wird. Die Förderrate des festen oder flüssigen zu verdampfenden Ausgangsstoffs beziehungsweise der Massenfluss des Trägergases wird von einem Regler 6 vorgegeben.

In dem Verdampfungskörper 3 wird dem zu verdampfenden Feststoff oder der zu verdampfenden Flüssigkeit, insbesondere dem erzeugten Aerosol Wärme zugeführt, so dass der Festkörper oder die Flüssigkeit ihren Aggregationszustand ändert. Der Ausgangsstoff verlässt den Verdampfungskörper 3 als im Trägergas transportierter Dampf durch eine eine Austrittsöffnung bildende Leitung 14. Er erreicht das Volumen 2, in dem sich ein Sensorelement 1 befindet, welches in der Lage ist, die Massenkonzentration beziehungsweise den Partialdruck des Dampfes innerhalb des Volumens 2 zu bestimmen. Aus der im Massenflusskontroller 7 eingestellten Trägergas-Massenfluss lässt sich somit der Massenfluss des Dampfes durch die sich dem Volumen 2 anschließende Leitung 14, also der Austrittsleitung, bestimmen.

Der Regler 6 erhält als Eingangsgröße entweder das Sensorsignal des Sensors 1 oder aber ein aus dem Sensorsignal 1 durch Messwert-Umformung gewonnenes, dem Massenfluss des Dampfes proportionales Messsignal.

Durch Variation der Förderrate des zu verdampfenden Festkörpers oder der zu verdampfenden Flüssigkeit oder durch Variation der Verdampfungstemperatur des zu verdampfenden Stoffes und Variation des im Massenflussregler 7 eingespeisten Massenflusswertes kann der Massenfluss des Dampfes eingestellt und zeitlich konstant gehalten werden.

Der in der Figur 2 dargestellte Sensor 1 besitzt ein Gehäuse 24. Das Gehäuse 24 besitzt eine Öffnung 21. Die Öffnung ist mittels eines Verschlusses 22 verschließbar. Die Verschlussstellung ist in der Figur 2 gestrichelt dargestellt. Der Boden der Öffnung 21 wird von einer aktiven Oberfläche 18 eines Kristalls aus Gallium-Ortho-Phosphat oder einem ähnlichen Werkstoff gebildet. Der Kristall 17 wird mittels einer Temperiereinrichtung 19 auf einer Temperatur gehalten, die niedriger ist, als die Temperatur des Volumens 2. Während die Temperatur des Volumens 2 oberhalb der Kondensationstemperatur des Dampfes, also insbesondere oberhalb von 350°C liegt, liegt die Temperatur des Kristalls 17 und insbesondere die Temperatur der aktiven Oberfläche 18 auf einer Temperatur, die niedriger ist, als die Kondensationstemperatur des Dampfes, also beispielsweise bei 300°C. Dies hat zur Folge, dass sich auf der Oberfläche 18 eine mit der Zeit dicker werdende Schicht abscheidet. Bei dieser Schicht handelt es sich um kondensierten Dampf.

Mittels einer nicht dargestellten elektrischen Anregungsvorrichtung bildet der Kristall 17 einen Schwingkreis. Die Resonanzfrequenz dieses Schwingkreises wird von den physikalischen Eigenschaften des Kristalls 17 bestimmt. Die Resonanzfrequenz wird aber auch durch die Massenanhäufung auf der aktiven Oberfläche 18 beeinflusst. Die kondensierte Schicht bildet eine Massenanhäufung auf der aktiven Oberfläche, die zu einer Dämpfung und zu einer Verstimmung der Resonanzfrequenz führt. Beispielsweise kann die Resonanzfrequenz mit zunehmender Schichtdicke abnehmen. Die Frequenz, mit der der Kristall 17 schwingt, ist somit ein Maß für die Dicke der auf der aktiven Oberfläche 18 abgeschiedenen Schicht. Demzufolge ist die Änderungsrate der Frequenz ein Maß für die Dampfkonzentration (den Partialdruck) innerhalb des Volumens, da die Abscheiderate, also die Wachstumsrate der auf der aktiven Oberfläche 18 abgeschiedenen Schicht von der Dampfkonzentration abhängig ist.

Die Wachstumsrate der auf der aktiven Oberfläche 18 abgeschiedenen Schicht ist aber auch von der Temperatur des Kristalls 17 beziehungsweise der Temperatur der aktiven Oberfläche 18 abhängig. Um eine möglichst lange Verwendungszeit des Sensors zu gewährleisten, ist vorgesehen, dass die Temperatur der aktiven Oberfläche nur geringfügig unterhalb der Kondensationstemperatur liegt. Beispielsweise kann die Temperatur der aktiven Oberfläche 18 50°C weniger betragen als die Kondensationstemperatur des Dampfes. Eine derart hohe Temperatur hat nicht nur eine geringe Wachstumsrate zur Folge, sondern auch die Bildung einer dichten beziehungsweise kompakten Schicht. Die abgeschiedene Schicht bildet sich mit einer minimalen Fehlstellungskonzentration, also einer dichtesten Packung der die Schicht bildenden Moleküle. Dies hat eine geringe Dämpfung des Schwingverhaltens des Kristalls 17 zur Folge. Eine geringere Wachstumsrate unterdrückt darüber hinaus Diffusionseinflüsse, die das Trägergas auf die Wachstumsrate hat.

Der Dampf besteht aus aromatischen Kohlenwasserstoffen, die als Festkörper eine höhere Elastizität aufweisen, als Metall oder anderweitige anorganische Materialien.

Beim erfindungsgemäßen Verfahren lässt sich mit Hilfe des zuvor beschriebenen Sensors 1 selektiv die Massenkonzentration eines verdampften organischen Ausgangsstoffs in einem Trägergas bestimmen. Als Trägergas wird beispielsweise N₂ verwendet. Dies erfolgt bei erhöhten Temperaturen oberhalb von 200°C und bei Gasdrucken im Bereich von 0,1 und 10 mbar. Der Anteil des Dampfes am Dampfträgergasgemisch kann 0,1 bis 10 % betragen. Der Sensor 1 erreicht eine Antwortzeit von weniger als 0,1 Sekunden. Als Teil eines Regelkreises kann mit dem Sensor 1 eine Dampfzufuhrrate zeitlich konstant gehalten werden.

Da der Sensor durch Aufheizen der aktiven Oberfläche 18 auf eine Temperatur oberhalb der Kondensationstemperatur selbsttätig und in situ gereinigt werden kann, besitzt eine bevorzugte Variante der Erfindung zwei oder mehr derartige Sensoren 1, die wahlweise zur Regelung verwendet werden können. Der zur Regelung verwendete Sensor wird über die Zuleitung/Ableitung 20 mit einer Kühlflüssigkeit, die in die Kühlkanäle 15 der Temperiereinrichtung eingespeist wird, auf eine Temperatur unterhalb der Kondensationstemperatur des Dampfes gekühlt. Die Sensorfrequenz wird über elektrische Leitungen 23 dem Regler 6 zugeführt. Die Öffnung 21 ist geöffnet.

Ein nicht zur Regelung verwendeter Sensor 1 wird nicht gekühlt. Seine aktive Oberfläche 18 besitzt eine Temperatur, die oberhalb der Kondensationstemperatur des Dampfes liegt, so dass eine sich dort gebildete Schicht verdampfen kann oder so dass dort keine Schicht wächst. Die Öffnung 21 kann aber auch mit dem Verschluss 22 verschlossen sein.

Der Regler 6 liefert zwei Stellgrößen. Mit einer ersten Stellgröße wird die Förderleistung eines zu verdampfenden Stoffes, insbesondere eines zu verdampfenden Pulvers, eingestellt. Beispielsweise kann dies durch Steuerung der Drehzahl einer Förderschnecke erfolgen, mit der ein Pulver zu einem Aerosolerzeuger gefördert wird, mit dem es in einen Gasstrom gebracht wird, der auf Verdampferflächen gerichtet ist. Mit einer zweiten Stellgröße wird die Temperatur der Verdampferflächen eingestellt. Gewisse Mengen des zu verdampfenden Pulvers können an den Verdampfungsflächen anhaften und so ein Reservoir bilden. Mit Hilfe dieses Reservoirs kann durch Variation der Verdampfungstemperatur die Dampfproduktionsrate kurzfristig variiert werden. Die langfristige Variation der Dampfproduktionsrate erfolgt durch Steuerung der Förderrate, mit der der zu verdampfende Stoff in den Verdampfer gebracht wird.

Der Regler 6 umfasst somit zwei Regelkreise. Mit dem ersten Regelkreis, der eine große Zeitkonstante besitzt, wird die Förderleistung des zu verdampfenden Stoffs geregelt. Die Förderleistung wird so eingestellt, dass eine durchschnittliche Dampfproduktionsrate auf einem vorgegebenen Sollwert gehalten ist. Mit dem zweiten Regelkreis wird die Verdampfungstemperatur verändert. Der zweite Regelkreis hat eine gegenüber der Zeitkonstante des ersten Regelkreises kleine Zeitkonstante. Mit diesem zweiten Regelkreis kann auf kurzzeitige Abweichungen der Dampfproduktionsrate durch Änderung der Verdampfungstemperatur reagiert werden. Beispielsweise kann durch Absenken der Verdampfungstemperatur die Verdampfungsleistung vermindert werden. Hierdurch kann sich eine Speichermasse in dem Verdampfer ansammeln. Durch Anheben der Verdampfungstemperatur kann diese Speichermasse verdampft werden, um auf ein kurzzeitiges Absinken der Förderleistung zu reagieren. Ein hier verwendetes Regelverfahren beziehungsweise eine anzuwendende Regelvorrichtung beschreiben die DE 10 2011 051 261 A1, DE 10 2011 051 260 A1 und DE 10 2011 051 931 A1.

Die vorstehenden Ausführungen dienen der Erläuterung der von der Anmeldung insgesamt erfassten Erfindung, die den Stand der Technik eigenständig weiterbildet.

Der Schutzumfang der Erfindung ist durch die nachstehenden Ansprüche definiert.

### Bezugszeichenliste:

- 1: Sensor
- 2: Volumen
- 3: Verdampfungskörper
- 4: Injektor
- 5: Aerosolerzeuger
- 6: Regler
- 7: Massenflussregler, -kontroller
- 8: Heizeinrichtung
- 9: Depositionsreaktor
- 10: Gaseinlassorgan
- 11: Substrat
- 12: Suszeptor
- 13: Zuleitung
- 14: Dampfeinspeiseleitung
- 15: Kühlkanal
- 16: Gasaustrittsöffnung
- 17: Kristall
- 18: Oberfläche
- 19: Temperiereinrichtung
- 20: Zuleitung/Ableitung
- 21: Öffnung
- 22: Verschluss
- 23: Leitung
- 24: Gehäuse

## Patentansprüche

1. Verfahren zur Regelung des Massenflusses eines von einem Trägergas durch ein Volumen (2) geförderten Dampfes, wobei das Volumen (2) mit einer Heizeinrichtung (8) auf eine Temperatur oberhalb der Kondensationstemperatur des Dampfes aufgeheizt wird, wobei mittels eines ersten Sensors (7), der ein Massenflusskontroller ist, ein definierter Fluss des Trägergases durch eine Zuleitung (13) in einen Verdampfer (2, 3, 4) eingeleitet wird, in dessen Verdampfungskörper (3) ein fester oder flüssiger Ausgangsstoff zu einem Dampf verdampft wird, der mit dem Trägergas zum Volumen (2) transportiert wird, in dem ein zweiter Sensor (1) angeordnet ist, der ein von der Konzentration beziehungsweise vom Partialdruck des Dampfes abhängiges Sensorsignal liefert, wobei mit einer Recheneinrichtung einer Auswerteeinrichtung durch Inbeziehungsetzen der von den beiden Sensoren (1, 7) ermittelten Werte ein Massenflusswert des Dampfes gewonnen wird, **dadurch gekennzeichnet, dass** der zweite Sensor (1) einen oszillierenden Schwingkörper (17) aufweist, dessen Oszillationsfrequenz von einer auf einer Oberfläche (18) des Schwingkörpers (17) vom kondensierten Dampf gebildeten Massenanhäufung beeinflusst wird, wobei der Schwingkörper (17) mittels einer Temperiereinrichtung (19, 20) auf einer Temperatur unterhalb der Kondensationstemperatur des Dampfes gebracht wird und die Konzentration beziehungsweise der Partialdruck aus der zeitlichen Änderung der Oszillatorfrequenz ermittelt wird, wobei der Massenfluss des Dampfes durch Variation der Förderrate eines zu verdampfenden Festkörpers oder einer zu verdampfenden Flüssigkeit oder durch Variation der Verdampfungstemperatur des zu verdampfenden Stoffes eingestellt und zeitlich konstant gehalten wird.

2. Vorrichtung zur Durchführung des Verfahrens nach Anspruch 1, mit einem Verdampfer (2, 3, 4) zur Erzeugung eines Dampfes, einem ersten Sensor (7), der ein Massenflusskontroller ist, zur Ermittlung eines einen Massenfluss eines Trägergases in den Verdampfer (2, 3, 4) entsprechenden ersten Wert, einer Heizeinrichtung (8), mit einem von der Heizeinrichtung (8) beheizbaren Volumen (2), in welches der im Verdampfer (2, 3, 4) erzeugte Dampf mittels des Trägergases transportiert wird, einem im Volumen (2) angeordneten zweiten Sensor (1), der einen zweiten Wert liefert, der von der Konzentration beziehungsweise vom Partialdruck des Dampfes abhängt, und mit einer Auswerteeinrichtung aufweisend eine Recheneinrichtung, die durch Inbeziehungsetzen der von den beiden Sensoren (1, 7) gewonnenen Werte einen Massenflusswert des Dampfes ermittelt, **dadurch gekennzeichnet, dass** der Sensor (1) einen in eine Oszillation bringbaren Schwingkörper (17) aufweist, dessen Oszillationsfrequenz von einer auf einer Oberfläche (18) des Schwingkörpers (17) vom kondensierten Dampf gebildeten Massenanhäufung beeinflusst wird, wobei der Schwingkörper (17) eine Temperiereinrichtung (19, 20) aufweist, mit der er auf eine Temperatur unterhalb der Kondensationstemperatur des Dampfes bringbar ist, wobei die Auswerteeinrichtung eingerichtet ist, die Konzentration beziehungsweise den Partialdruck aus der zeitlichen Änderung der Oszillatorfrequenz zu ermitteln und den Massenfluss des Dampfes durch Variation der Förderrate eines zu verdampfenden Festkörpers oder einer zu verdampfenden Flüssigkeit oder durch Variation der Verdampfungstemperatur des zu verdampfenden Stoffes zeitlich konstant zu halten.

3. Vorrichtung nach Anspruch 2, **dadurch gekennzeichnet, dass** die Temperiereinrichtung (19, 20) eine Kühleinrichtung ist, mit der der Schwingkörper (17) kühlbar ist.

4. Vorrichtung nach Anspruch 3, **dadurch gekennzeichnet, dass** der Schwingkörper (17) ein Kristall aus Gallium-Ortho-Phosphat (GaPO₄) ist.

5. Verfahren nach Anspruch 1, **dadurch gekennzeichnet, dass** mittels einer Einspeiseeinrichtung (13) ein Trägergas in einen Verdampfer (2, 3, 4) eingespeist wird, in welchen eine Flüssigkeit oder ein Festkörper durch Wärmebeaufschlagung in einen gasförmigen Zustand gebracht wird, wobei die Flussrate des Trägergases und/oder die Dampfproduktionsrate des Verdampfers (2, 3, 4) beispielsweise die Förderleistung des zu verdampfenden Stoffes oder die Verdampfungstemperatur von einem Regler (6) verändert wird, der zusammen mit dem Sensor (1) einen geschlossenen Regelkreis bildet.

6. Vorrichtung nach einem der Ansprüche 2- 4, **dadurch gekennzeichnet, dass** ein Regler (6) zur Regelung der Dampfproduktionsrate zwei Regelkreise aufweist: Einen, eine große Zeitkonstante aufweisenden ersten Regelkreis, mit dem eine durchschnittliche Dampfproduktionsrate auf einem vorgegebenen Durchschnittswert durch Variation der Förderleistung des zu verdampfenden Stoffs geregelt wird, und einen, eine kleine Zeitkonstante aufweisenden zweiten Regelkreis, mit dem kurzzeitige Abweichungen der aktuellen Dampfproduktionsrate vom Durchschnittswert durch Änderung der Verdampfungstemperatur kompensiert werden.

7. Vorrichtung nach einem der Ansprüche 2-4 oder 6, **dadurch gekennzeichnet, dass** der erste Sensor (1), der Verdampfer (2, 3, 4) Teile einer Gasversorgung einer OVPD (organic-vapor-phase-deposition) Beschichtungseinrichtung sind, die einen Depositionsreaktor (9) aufweist, in den ein kühlbarer Suszeptor (12) angeordnet ist zur Aufnahme ein oder mehrerer zu beschichtender Substrate (11), wobei durch eine Zuleitung (13) ein Eingangsgasstrom eines Trägergases in den Verdampfer (2, 3, 4) eintritt, welches den Verdampfer (2, 3, 4) durchströmt und zusammen mit dem im Verdampfer (2, 3, 4) durch Verdampfen eines Ausgangsstoffs erzeugten Dampf als Ausgangsstrom aus dem Verdampfer (2, 3, 4) durch eine Einspeiseleitung (14) austritt, wobei der Massenfluss des Eingangsstromes mit dem vor der Eintrittsöffnung angeordneten zweiten Sensor und mit dem ersten Sensor (1) ein vom Partialdruck des Dampfes abhängiger Wert ermittelbar ist, wobei die Recheneinrichtung eingerichtet ist, durch Inbeziehungsetzen der beiden Werte einen dem Massenfluss des im Ausgangsstrom transportierten Dampfes entsprechenden Wert zu gewinnen.

8. Vorrichtung nach einem Ansprüche 2-4, 6 oder 7, **dadurch gekennzeichnet, dass** der Sensor (1) auf Temperaturen über 160°C, insbesondere über 180°C und bevorzugt bis zu 450°C aufheizbar ist.

9. Vorrichtung nach einem Ansprüche 2-4 oder 6-8, **dadurch gekennzeichnet, dass** die Oberfläche (18) mittels eines Verschlusses (22) verschließbar ist.

10. Verfahren nach einem der Ansprüche 1 oder 5, **dadurch gekennzeichnet, dass** zwei baugleiche zweite Sensoren (1) verwendet werden, wobei jeweils ein Sensor (1) auf einer Temperatur unterhalb der Kondensationstemperatur des Dampfes und insbesondere unterhalb der Temperatur des Volumens (2) gehalten wird und der jeweils andere Sensor (1) auf einer Temperatur oberhalb der Kondensationstemperatur und insbesondere auf der Temperatur des Volumens (2) gehalten wird.

11. Verfahren nach einem der Ansprüche 1, 5 oder 10, **dadurch gekennzeichnet, dass** der zweite Sensor (1) auf einer Temperatur von größer als 160°C, bevorzugt größer als 180°C und besonders bevorzugt auf einer Temperatur von 50°C unterhalb der Temperatur des Volumens (2) gehalten wird.

12. Verfahren nach Anspruch 11, **dadurch gekennzeichnet, dass** die Temperatur des Volumens (2) größer als 200°C, größer als 350°C und insbesondere kleiner als 450°C ist.

13. Verfahren nach einem Ansprüche 1, 5 oder 10-12, **dadurch gekennzeichnet, dass** der zweite Sensor (1) zur Reinigung auf eine Temperatur oberhalb der Kondensationstemperatur des Dampfes aufgeheizt wird, so dass das sich auf der Sensoroberfläche gebildete Kondensat abdampft.

14. Verfahren nach einem der Ansprüche 1, 5 oder 10-13, **dadurch gekennzeichnet, dass** der Totaldruck innerhalb des Volumens (2) im Bereich zwischen 0,1 und 10 mbar liegt, und/oder, dass die Massenkonzentration des Dampfes im Trägergas im Bereich zwischen 0,1 und 10% liegt.

15. Verfahren nach einem der Ansprüche 1, 5 oder 10-14, **dadurch gekennzeichnet, dass** zwei baugleiche zweite Sensoren (1) verwendet werden und diese derart beheizt werden, dass jeweils ein Sensor (1) auf einer Temperatur unterhalb der Kondensationstemperatur des Dampfes und insbesondere unterhalb der Temperatur des Volumens (2) gehalten wird und der jeweils andere Sensor (1) auf einer Temperatur oberhalb der Kondensationstemperatur und insbesondere auf der Temperatur des Volumens (2) gehalten wird.

## Claims

1. Method for controlling the mass flow of a vapor conveyed by a carrier gas through a volume (2), wherein the volume (2) is heated by a heating unit (8) to a temperature above the condensation temperature of the vapor, wherein by means of a first sensor (7), which is a mass flow controller, a defined flow of the carrier gas is introduced through a feed line (13) into an vaporizer (2, 3, 4), in the vaporization body (3) of which a solid or liquid starting material is evaporated to form a vapor which is transported with the carrier gas to the volume (2) in which a second sensor (1) is arranged which supplies a sensor signal dependent on the concentration or on the partial pressure of the vapor, wherein with a computing device of an evaluation device a mass flow of the vapor is calculated by relating the values determined by the two sensors (1, 7), **characterised in that** the second sensor (1) has an oscillating oscillating body (17) whose oscillation frequency is influenced by a mass accumulation formed on a surface (18) of the oscillating body (17) by the condensed vapor, the oscillating body (17) being kept at a temperature below the condensation temperature by means of a temperature control device (19, 20) to a temperature below the condensation temperature of the vapor and the concentration or the partial pressure is determined from the change in the oscillator frequency with respect to time, the mass flow of the vapor being set by varying the delivery rate of a solid body to be vaporised or of a liquid to be vaporised or by varying the vaporisation temperature of the substance to be vaporised and being kept constant with respect to time.

2. Device for carrying out the method according to claim 1, having an evaporator (2, 3, 4) for generating a vapor, a first sensor (7), which is a mass flow controller, for determining a first value corresponding to a mass flow of a carrier gas into the evaporator (2, 3, 4), a heating device (8), having a volume (2) which can be heated by the heating device (8) and into which the vapor generated in the evaporator (2, 3, 4) is transported by means of the carrier gas, a second sensor (1) which is arranged in the volume (2) and supplies a second value which depends on the concentration or on the partial pressure of the vapor, and having an evaluation device comprising a computing device which determines a mass flow value of the vapor by relating the values obtained from the two sensors (1, 7), **characterised in that** the sensor (1) has an oscillating body (17) which can be brought into oscillation and the oscillation frequency of which is influenced by a mass accumulation formed on a surface (18) of the oscillating body (17) by the condensed vapor, wherein the oscillating body (17) has a temperature control device (19, 20) by means of which it can be brought to a temperature below the condensation temperature of the vapor, the evaluation device being set up to determine the concentration or the partial pressure from the change in the oscillator frequency over time and to keep the mass flow of the vapor constant over time by varying the delivery rate of a solid to be vaporised or of a liquid to be vaporised or by varying the vaporisation temperature of the substance to be vaporised.

3. Device according to claim 2, **characterised in that** the temperature control device (19, 20) is a cooling device with which the oscillating body (17) can be cooled.

4. The device according to claim 3, **characterised in that** the oscillating body (17) is a crystal of gallium ortho-phosphate (GaPO₄).

5. Method according to claim 1, **characterised in that** a carrier gas is fed by means of a feed-in device (13) into vaporizer (2, 3, 4), in which a liquid or a solid is brought into a gaseous state by the application of heat, the flow rate of the carrier gas and/or the vapor production rate of the vaporizer (2, 3, 4), for example the delivery rate of the substance to be evaporated or the evaporation temperature, being varied by a controller (6) which, together with the sensor (1), forms a closed control loop.

6. Apparatus according to one of the claims 2-4, **characterised in that** a controller (6) for controlling the vapor production rate has two control circuits: a first control circuit having a high time constant, with which an average vapor production rate is controlled at a predetermined average value by variation of the delivery rate of the substance to be vaporized, and a second control circuit having a low time constant, with which temporary deviations of the current vapor production rate from the average value are compensated by changing the vaporization temperature.

7. Apparatus according to one of the claims 2-4 or 6, **characterised in that** the first sensor (1), the vaporizer (2, 3, 4) are parts of a gas supply of an OVPD (organic-vapor-phase-deposition) coating device, which comprises a deposition reactor (9) in which a coolable susceptor (12) is arranged for receiving one or more substrates (11) to be coated, wherein an inlet gas stream of a carrier gas enters the vaporizer (2, 3, 4) through a feed line (13), flows through the vaporizer (2, 3, 4) and, together with the carrier gas stored in the vaporizer (2, 3, 4) by evaporating a starting material, exits from the vaporizer (2, 3, 4) through a feeder line (14) as an output stream, it being possible to determine the mass flow of the input stream with the second sensor arranged upstream of the inlet opening and to determine a value dependent on the partial pressure of the vapor with the first sensor (1), the computing device being set up to obtain a value corresponding to the mass flow of the vapor transported in the output stream by relating the two values.

8. Device according to one of claims 2-4, 6 or 7, **characterised in that** the sensor (1) can be heated to temperatures above 160°C, in particular above 180°C and preferably up to 450°C.

9. A device according to any one of claims 2-4 or 6-8, **characterised in that** the surface (18) is closable by means of a closure (22).

10. Method according to one of claims 1 or 5, **characterised in that** two second sensors (1) of identical construction are used, wherein in each case one sensor (1) is kept at a temperature below the condensation temperature of the vapor and in particular below the temperature of the volume (2) and the respective other sensor (1) is kept at a temperature above the condensation temperature and in particular at the temperature of the volume (2).

11. A method according to any one of claims 1, 5 or 10, **characterised in that** the second sensor (1) is maintained at a temperature greater than 160°C, preferably greater than 180°C and more preferably at a temperature 50°C below the temperature of the volume (2).

12. Method according to claim 11, **characterised in that** the temperature of the volume (2) is greater than 200°C, greater than 350°C and in particular less than 450°C.

13. A method according to any one of claims 1, 5 or 10-12, **characterised in that** the second sensor (1) is heated to a temperature above the condensation temperature of the vapor for cleaning, so that the condensate formed on the sensor surface evaporates.

14. Apparatus according to any one of claims 1, 5 or 10-13, **characterised in that** the total pressure within the volume (2) is in the range between 0.1 and 10 mbar, and/or that the mass concentration of the vapor in the carrier gas is in the range between 0.1 and 10%.

15. Device according to one of claims 1, 5 or 10-14, **characterised in that** two second sensors (1) of identical construction are used and these are heated in such a way that in each case one sensor (1) is kept at a temperature below the condensation temperature of the vapor and in particular below the temperature of the volume (2) and the other sensor (1) in each case is kept at a temperature above the condensation temperature and in particular at the temperature of the volume (2).

## Revendications

1. Procédé de régulation du débit massique d'une vapeur transportée à travers un volume (2) par un gaz porteur, sachant que le volume (2) est chauffé avec un système de chauffage (8) à une température au-dessus de la température de condensation de la vapeur, sachant qu'au moyen d'un premier capteur (7), qui est un contrôleur de débit massique, un débit défini du gaz porteur est initié par un conduit d'alimentation (13) dans un évaporateur (2, 3, 4) dans le corps d'évaporation (3) duquel une substance initiale solide ou liquide est évaporé en une vapeur, qui est transportée avec le gaz porteur vers le volume (2) dans lequel est disposé un deuxième capteur (1), qui délivre un signal de détection dépendant de la concentration ou bien de la pression partielle de la vapeur, sachant qu'avec un système de calcul d'un système d'évaluation, une valeur de débit massique de la vapeur est acquise en prenant en considération les valeurs déterminées par les deux capteurs (1, 7), **caractérisé en ce que** le deuxième capteur (1) comporte un corps oscillant (17) oscillant, dont la fréquence d'oscillation est influencée par une accumulation massique formée par de la vapeur condensée sur une surface (18) du corps oscillant (17), sachant que le corps oscillant (17) est placé à une température en dessous de la température de condensation de la vapeur au moyen d'un système de thermorégulation (19, 20) et la concentration ou bien la pression partielle est déterminée à partir de la variation temporelle de la fréquence d'oscillateur, sachant que le débit massique de la vapeur est réglée et maintenue constant dans le temps par variation du taux de transfert d'un solide à évaporer ou d'un liquide à évaporer ou par variation de la température d'évaporation de la substance à évaporer.

2. Dispositif permettant d'exécuter le procédé selon la revendication 1, avec un évaporateur (2, 3, 4) pour produire une vapeur, un premier capteur (7), qui est un contrôleur de débit massique, pour déterminer une première valeur correspondant à un débit massique d'un gaz porteur dans l'évaporateur (2, 3, 4), un système de chauffage (8), avec un volume (2) réchauffable par un système de chauffage (8) dans lequel la vapeur générée dans l'évaporateur (2, 3, 4) est transportée au moyen du gaz porteur, un deuxième capteur (1) disposé dans le volume (2), qui délivre une deuxième valeur, qui dépend de la concentration ou bien de la pression partielle de la vapeur et avec un système d'évaluation comportant un système de calcul, qui détermine une valeur de débit massique de la vapeur en prenant en considération les valeurs acquises par les deux capteurs (1, 7), **caractérisé en ce que** le capteur (1) comporte un corps oscillant (17) pouvant être mis en une oscillation, dont la fréquence d'oscillation est influencée par une accumulation massique formée par de la vapeur condensée sur une surface (18) du corps oscillant (17), sachant que le corps oscillant (17) comporte un système de thermorégulation (19, 20) avec lequel il peut être placé à une température en dessous de la température de condensation de la vapeur, sachant que le système d'évaluation est agencé pour déterminer la concentration ou bien la pression partielle à partir de la variation temporelle de la fréquence d'oscillateur et pour maintenir constant dans le temps le débit massique de la vapeur par variation du taux de transfert d'un solide à évaporer ou d'un liquide à évaporer ou par variation de la température d'évaporation de la substance à évaporer.

3. Dispositif selon la revendication 2, **caractérisé en ce que** le système de thermorégulation (19, 20) est un système de refroidissement avec lequel le corps oscillant (17) peut être refroidi.

4. Dispositif selon la revendication 3, **caractérisé en ce que** le corps oscillant (17) est un cristal en orthophosphate de gallium (GaPO₄).

5. Dispositif selon la revendication 1, **caractérisé en ce qu'**au moyen d'un système d'alimentation (13), un gaz porteur est introduit dans un évaporateur (2, 3, 4) dans lequel un liquide ou un solide est placé dans un état gazeux par application de chaleur, sachant que le débit du gaz porteur et/ou le taux de production de vapeur de l'évaporateur (2, 3, 4), par exemple la capacité de transport de la substance à évaporer ou la température d'évaporation, est modifié par un régulateur (6), qui forme ensemble avec le capteur (1) un circuit de régulation fermé.

6. Dispositif selon l'une quelconque des revendications 2-4, **caractérisé en ce qu'**un régulateur (6) pour la régulation du taux de production de vapeur comporte deux circuits de régulation: l'un étant un premier circuit de régulation comportant une grande constante de temps , avec lequel un taux de production de vapeur moyen est régulé à une valeur moyenne prédéfinie par variation de la capacité de transfert de la substance à évaporer et l'autre étant un deuxième circuit de régulation comportant une faible constante de temps, avec lequel les brefs écarts du taux de production de vapeur actuel par rapport à la valeur moyenne sont compensés par variation de la température d'évaporation.

7. Dispositif selon l'une quelconque des revendications 2-4 ou 6, **caractérisé en ce que** le premier capteur (1), l'évaporateur (2, 3, 4) font partie d'une alimentation en gaz d'un système de revêtement par déposition en phase vapeur organique (DPVO), qui comporte un réacteur de déposition (9) dans lequel est disposé un suscepteur refroidissable (12) pour recevoir un ou plusieurs substrats à revêtir (11), sachant qu'un courant de gaz d'entrée d'un gaz porteur pénètre par un conduit d'alimentation (13) dans l'évaporateur (2, 3, 4), lequel traverse l'évaporateur (2, 3, 4) et sort en tant que courant de sortie de l'évaporateur (2, 3, 4) par un conduit d'alimentation (14) ensemble avec la vapeur produite dans l'évaporateur (2, 3, 4) par évaporation d'une substance initiale, sachant que le débit massique du courant d'entrée peut être déterminé avec le deuxième capteur disposé dans l'ouverture d'entrée et avec le premier capteur (1) une valeur dépendant de la pression partielle de la vapeur, sachant que le système de calcul est agencé pour acquérir, en prenant en considération les deux valeurs, une valeur correspondant au débit massique de la vapeur transportée dans le courant de sortie.

8. Dispositif selon l'une quelconque des revendications 2-4, 6 ou 7, **caractérisé en ce que** le capteur (1) peut être chauffé à des températures au-dessus de 160° C, en particulier au-dessus de 180° C et de préférence jusqu'à 450° C.

9. Dispositif selon l'une quelconque des revendications 2-4 ou 6-8, **caractérisé en ce que** la surface (18) peut être fermée au moyen d'une fermeture (22).

10. Procédé selon l'une quelconque des revendications 1 ou 5, **caractérisé en ce que** deux deuxièmes capteurs (1) de même conception sont utilisés, sachant qu'un capteur (1) est maintenu à chaque fois à une température en dessous de la température de condensation de la vapeur et en particulier en dessous de la température du volume (2) et l'autre capteur (1) est maintenu à chaque fois à une température au-dessus de la température de condensation et en particulier à la température du volume (2).

11. Procédé selon l'une quelconque des revendications 1, 5 ou 10, **caractérisé en ce que** le deuxième capteur (1) est maintenu à une température supérieure à 160° C, de préférence supérieure à 180° C et en particulier de préférence à une température de 50° C en dessous de la température du volume (2).

12. Procédé selon la revendication 11, **caractérisé en ce que** la température du volume (2) est supérieure à 200° C, supérieure à 350° C et en particulier inférieure à 450° C.

13. Procédé selon l'une quelconque des revendications 1, 5 ou 10-12, **caractérisé en ce que** le deuxième capteur (1) est chauffé pour le nettoyage à une température au-dessus de la température de condensation de la vapeur de telle manière que le condensat formé à la surface du capteur s'évapore.

14. Procédé selon l'une quelconque des revendications 1, 5 ou 10-13, **caractérisé en ce que** la pression totale se situe à l'intérieur du volume (2) dans une plage entre 0,1 et 10 mbar et/ou **en ce que** la concentration massique de la vapeur dans le gaz porteur se situe dans une plage entre 0,1 et 10 %.

15. Procédé selon l'une quelconque des revendications 1, 5 ou 10-14, **caractérisé en ce que** deux deuxièmes capteurs (1) de même conception sont utilisés et ceux-ci sont chauffés de telle manière qu'un capteur (1) est maintenu à chaque fois à une température en dessous de la température de condensation de la vapeur et en particulier en dessous de la température du volume (2) et l'autre capteur (1) est maintenu à chaque fois à une température au-dessus de la température de condensation et en particulier à la température du volume (2).
